# FASCICULE DE BREVET EUROPEEN

(11) **EP 3 627 459 B1**
(45) Date de publication et mention de la délivrance du brevet: **28.07.2021**
(21) Numéro de dépôt: 19197558.0
(22) Date de dépôt: 16.09.2019
(51) Int. Cl.: G07C 9/00, H04W 4/80, H04W 76/30, H04W 4/02

(54) **PROCÉDÉ DE CONTRÔLE D'ACCÈS ET DISPOSITIF DE CONTRÔLE D'ACCÈS CONVENANT À LA MISE EN OEUVRE DUDIT PROCÉDÉ**
ZUGANGSKONTROLLVERFAHREN UND ZUGANGSKONTROLLVORRICHTUNG ZUR UMSETZUNG DIESES VERFAHRENS
ACCESS CONTROL METHOD AND ACCESS CONTROL DEVICE SUITABLE FOR IMPLEMENTING SAID METHOD

(30) Priorité: 20.09.2018 FR 1858497
(43) Date de publication de la demande: 25.03.2020
(73) Titulaire: Sewosy, 67500 Haguenau (FR)
(72) Inventeur: SCHOETTEL, Jean-Philippe, 67270 SCHWINDRATZHEIM (FR)
(74) Mandataire: Cabinet Nuss

(56) Documents cités:
- WO-A1-2016/089837
- FR-A1- 3 037 178
- US-A1- 2014 148 193
- US-A1- 2015 024 786

## Description

La présente invention concerne le domaine du contrôle d'accès dans un espace sécurisé fermé par un élément d'accès permettant ou empêchant l'accès dans ledit espace, et a pour objet un procédé de contrôle d'accès dans au moins un espace sécurisé, ainsi qu'un dispositif de contrôle d'accès convenant à la mise en œuvre dudit procédé.

Dans la suite du brevet on entendra par élément d'accès toute séparation comportant au moins un ouvrant et un dormant, telle que, par exemple, des portes, portails, barrières ou tiroirs.

Un espace sécurisé peut être situé, par exemple, dans un bâtiment, un garage, un parking, un espace extérieur ou encore dans un mobilier tel qu'une armoire de rangement, un tiroir ou un casier.

Dans les bâtiments comportant des espaces sécurisés nécessitant un contrôle particulier des entrées et sorties de personnes ou de biens, il est nécessaire d'équiper chaque élément d'accès fermant un espace sécurisé avec au moins un dispositif de contrôle d'accès. Il en est de même dans les espaces extérieurs dont une partie sécurisée est fermée, par exemple, par un portail.

Un tel dispositif de contrôle d'accès comprend généralement un dispositif de verrouillage du type serrure électrique ou magnétique activée par un courant électrique et un lecteur de contrôle d'accès apte à commander l'activation de ladite serrure à l'état de verrouillage ou de déverrouillage. Le lecteur de contrôle d'accès est en outre apte à demander un code d'identification à un utilisateur ou à coopérer à courte distance avec un appareil portable communicant, tel que par exemple une carte magnétique ou un téléphone portable.

En fonctionnement, lors d'un contrôle d'accès dans un espace sécurisé réalisé grâce à un lecteur de contrôle d'accès coopérant avec un appareil portable communicant, ledit lecteur réalise tout d'abord une étape de recherche, aussi appelée, sous la dénomination anglaise, étape d'« advertising », lors de laquelle il émet devant l'élément d'accès une onde destinée à être captée par un éventuel appareil portable communicant se trouvant dans la zone d'émission de ladite onde, dite zone de balayage. Lorsque l'appareil portable capte l'onde, celui-ci se connecte fonctionnellement au lecteur de contrôle d'accès, puis échange avec ce dernier des informations d'authentification qui sont analysées par la suite par le lecteur de contrôle d'accès pour décider de délivrer, ou non, un droit d'accès à l'espace sécurisé audit appareil. Lorsque le droit d'accès est délivré, la réception par le lecteur de contrôle d'accès d'une information de commande de l'activation du dispositif de verrouillage, pour modifier l'état de verrouillage de l'élément d'accès, provoque le verrouillage ou le déverrouillage dudit élément d'accès.

Cependant, lorsque plusieurs lecteurs de contrôle d'accès se trouvent dans un lieu avec un espace restreint, c'est-à-dire dans un lieu comprenant une pluralité d'éléments d'accès assurant l'accès dans des espaces sécurisés et situés à proximité l'un de l'autre, les zones de balayage propres à chaque lecteur de contrôle d'accès dédié à un élément d'accès peuvent se recouper. Il en résulte que deux ondes provenant de deux lecteurs de contrôle d'accès peuvent être captées simultanément par un même appareil portable communicant qui se trouve alors dans l'incapacité de choisir à quel lecteur de contrôle d'accès se connecter. Il en résulte donc des problèmes de sécurité évidents dus à une connexion aléatoire, non souhaitée par l'utilisateur, de l'appareil à un lecteur de contrôle d'accès, provoquant potentiellement un changement d'état de verrouillage non désiré de l'élément d'accès associé audit lecteur de contrôle d'accès.

Pour résoudre ce problème, il a été proposé d'intégrer à l'appareil portable communicant un moyen permettant de mesurer la puissance du signal radio reçu afin de déterminer quel lecteur se trouve le plus proche dudit appareil. Par exemple, le document FR 3 037 178 décrit un procédé de contrôle d'accès mettant en œuvre un lecteur de contrôle d'accès coopérant avec un terminal téléphonique, plus particulièrement un smartphone, dans lequel un moyen de mesure de la puissance en réception d'un signal radio capté est intégré. Lors de la réception de plusieurs signaux d'annonce émis par plusieurs lecteurs dans le champ de portée du terminal téléphonique, ce dernier réalise une mesure de la puissance en réception de chaque signal afin de déterminer quel signal présente la puissance la plus élevée et se connecte en conséquence au lecteur d'où provient ce signal. Le risque d'un conflit provenant de la réception simultanée par le terminal mobile de plusieurs signaux est donc limité. Un autre exemple est décrit par le document WO 2016/089837.

Toutefois, il est tout à fait possible que le lecteur de contrôle d'accès le plus proche ne soit pas celui qui est dédié à l'élément d'accès que l'utilisateur souhaite ouvrir. Cela peut être le cas lorsque deux lecteurs de contrôle d'accès dédiés chacun à un élément d'accès fermant un accès sécurisé se trouvent dans le champ de portée du terminal téléphonique et que, par exemple, l'utilisateur dudit terminal se trompe d'élément d'accès et se rapproche par erreur du lecteur de contrôle d'accès, dit mauvais lecteur de contrôle d'accès, connecté à l'élément d'accès dont l'ouverture n'est pas souhaitée et avec lequel l'appareil est connecté du fait de la puissance détectée, puis s'éloigne dudit élément d'accès pour se rendre vers l'autre lecteur de contrôle d'accès, dit bon lecteur de contrôle d'accès, de l'élément d'accès dont l'ouverture est souhaitée. Une telle situation peut également se produire lorsqu'un utilisateur croise un tiers ou un obstacle et s'écarte de celui-ci en se rapprochant involontairement du mauvais lecteur. La méthode décrite dans le document FR 3 037 178 ne permet pas, après connexion du terminal portable au mauvais lecteur de contrôle d'accès, de déconnecter ce dernier de l'appareil portable de l'utilisateur lorsque celui-ci s'éloigne pour se diriger vers le bon lecteur de contrôle d'accès, pour accéder à l'espace sécurisé correspondant, ce qui est problématique pour l'utilisateur qui ne peut se connecter au bon lecteur de contrôle d'accès et risque de provoquer des failles de sécurité.

La présente invention a pour but de pallier ces inconvénients en proposant un procédé de contrôle d'accès sécurisé permettant, notamment suite à la connexion d'un appareil portable communicant avec un mauvais lecteur de contrôle d'accès, la connexion automatique dudit appareil portable communicant au bon lecteur de contrôle d'accès.

A cet effet, le procédé de contrôle d'accès, selon la présente invention, dans au moins un espace sécurisé fermé par au moins un élément d'accès muni d'un dispositif de verrouillage, ledit procédé consistant à réaliser, à l'aide d'un dispositif de contrôle d'accès comprenant au moins un appareil portable communicant destiné à être porté par un utilisateur et au moins un lecteur de contrôle d'accès dédié audit élément d'accès et destiné à être connecté au dispositif de verrouillage correspondant, les étapes suivantes de contrôle d'accès :
- une étape de recherche lors de laquelle le lecteur de contrôle d'accès émet une onde de recherche dans une zone donnée, dite zone de balayage,
- une étape de connexion lors de laquelle un appareil portable communicant situé dans la zone de balayage capte l'onde de recherche et se connecte au lecteur de contrôle d'accès par liaison radio,
- une étape d'authentification lors de laquelle l'appareil portable communicant ainsi connecté communique des informations d'authentification audit lecteur de contrôle d'accès qui délivre, ou non, sur la base de ces informations, un droit d'accès audit appareil portable communicant,
- si un droit d'accès a été délivré par le lecteur de contrôle d'accès, une étape d'instruction lors de laquelle le lecteur de contrôle d'accès modifie l'état de verrouillage de l'élément d'accès auquel il est connecté suite à la réception par ledit lecteur de contrôle d'accès d'une information de commande de l'activation du dispositif de verrouillage pour modifier l'état de verrouillage de l'élément d'accès, ladite information de commande étant générée automatiquement suite à au moins une action de l'utilisateur,
   se caractérise en ce qu'il consiste en outre, suite à l'étape de connexion, à partir du dispositif de contrôle d'accès dans lequel le lecteur de contrôle d'accès comprend un dispositif de détection de présence, de préférence comprenant un radar et/ou une caméra, ledit dispositif de détection de présence étant apte à détecter un éloignement et, le cas échéant, aussi un rapprochement de l'utilisateur par rapport audit lecteur de contrôle d'accès :
   dès que le dispositif de détection de présence détecte un éloignement de l'utilisateur, tant que l'éloignement est détecté ou durant une période prédéterminée, à déconnecter automatiquement et sensiblement instantanément le lecteur de contrôle d'accès de l'appareil portable communicant.

L'invention a également pour objet un dispositif de contrôle d'accès dans au moins un espace sécurisé fermé par au moins un élément d'accès muni d'un dispositif de verrouillage, ledit dispositif convenant à la mise en œuvre du procédé selon la présente invention et comprenant au moins un appareil portable communicant destiné à être porté par un utilisateur et au moins un lecteur de contrôle d'accès destiné à être connecté fonctionnellement au ou à l'un des dispositifs de verrouillage, le ou chaque lecteur de contrôle d'accès comprenant :
- des moyens d'émission d'une onde de recherche sur une zone donnée, dite zone de balayage,
- des moyens de connexion permettant de connecter le lecteur de contrôle d'accès avec le ou l'un des appareil(s) portable(s) communicant situé dans ladite zone de balayage pour échanger des informations avec ce dernier,
- une unité de traitement et de commande apte à recevoir et traiter des informations d'authentification provenant de l'appareil portable communicant et à délivrer, ou non, sur la base de ces informations d'authentification, un droit d'accès audit appareil portable communicant et, suite à ladite délivrance du droit d'accès et à la réception d'une information de commande de l'activation du dispositif de verrouillage, à commander l'activation du dispositif de verrouillage pour modifier l'état de verrouillage de l'élément d'accès correspondant,
   dispositif de contrôle d'accès se caractérisant en ce que le ou chaque lecteur de contrôle d'accès comprend en outre un dispositif de détection de présence, par exemple comprenant un radar et/ou une caméra, apte à détecter un éloignement et, le cas échéant, aussi un rapprochement de l'utilisateur par rapport audit lecteur de contrôle d'accès et à transmettre un signal représentatif de ladite détection, et en ce que ladite unité de traitement et de commande est en outre apte, d'une part, à recevoir le signal représentatif de la détection et à analyser ledit signal pour déterminer si l'utilisateur s'approche ou s'éloigne du lecteur de contrôle d'accès et, si ladite unité de traitement et de commande détermine que l'utilisateur s'éloigne, à envoyer un signal de déconnexion ayant pour effet de déconnecter sensiblement instantanément, suite à ladite détection d'éloignement, le lecteur de contrôle d'accès de l'appareil portable communicant correspondant, et, d'autre part, à maintenir l'état de déconnexion tant que les moyens d'acquisition déterminent un éloignement de l'utilisateur ou durant une période prédéterminée.

L'invention sera mieux comprise, grâce à la description ci-après, qui se rapporte à un mode de réalisation préféré, donné à titre d'exemple non limitatif, et expliqué avec références aux dessins schématiques annexés, dans lesquels :
- la figure 1 est une vue du dessus montrant un utilisateur et un tiers se croisant dans un couloir présentant deux éléments d'accès tels que des portes reliées respectivement à un lecteur de contrôle d'accès et dans lequel couloir les zones de balayage des lecteurs se recoupent,
- la figure 2 est une vue en perspective montrant une porte munie d'un lecteur de contrôle d'accès et un utilisateur s'approchant dudit lecteur,

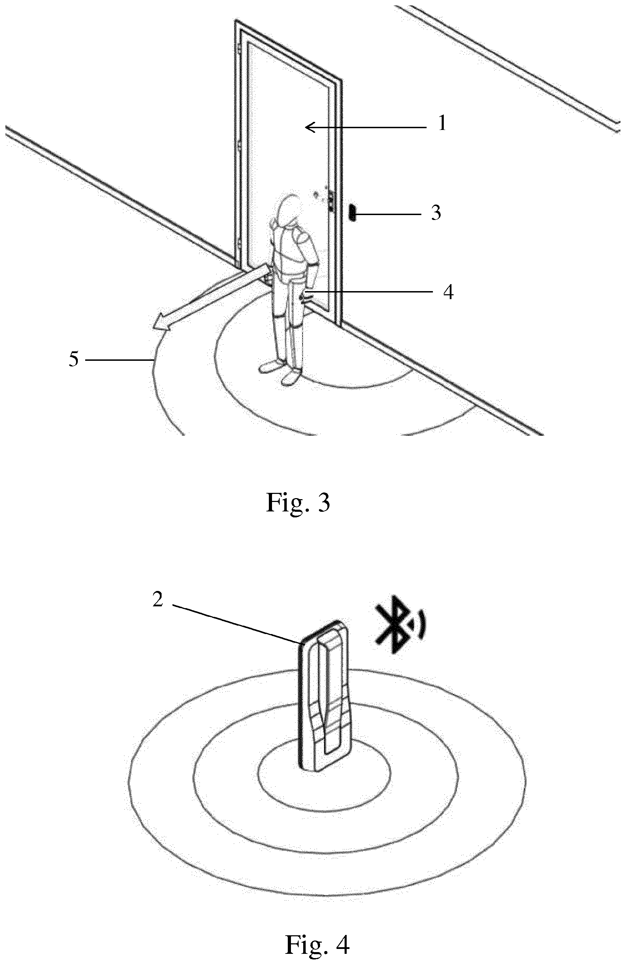

- la figure 3 est une vue en perspective similaire à la vue présentée à la figure 2 montrant le même utilisateur s'éloignant du lecteur de contrôle d'accès,
- la figure 4 montre un exemple d'appareil portable communicant,
- la figure 5 montre une vue schématique en perspective et éclatée du lecteur de contrôle d'accès.

Le procédé de contrôle d'accès, selon la présente invention, dans au moins un espace sécurisé fermé par au moins un élément d'accès munie d'un dispositif de verrouillage, consiste à réaliser, à l'aide d'un dispositif de contrôle d'accès comprenant au moins un appareil portable communicant destiné à être porté par un utilisateur 4 et au moins un lecteur de contrôle d'accès 3 dédié audit élément d'accès et destiné à être connecté au dispositif de verrouillage correspondant, les étapes suivantes de contrôle d'accès :
- une étape de recherche lors de laquelle le lecteur de contrôle d'accès 3 émet une onde de recherche dans une zone donnée, dite zone de balayage 5,
- une étape de connexion lors de laquelle un appareil portable communicant 2 situé dans la zone de balayage 5 capte l'onde de recherche et se connecte au lecteur de contrôle d'accès 3 par liaison radio,
- une étape d'authentification lors de laquelle l'appareil portable communicant 2 ainsi connecté communique des informations d'authentification audit lecteur de contrôle d'accès 3 qui délivre, ou non, sur la base de ces informations, un droit d'accès audit appareil portable communicant 2,
- si un droit d'accès a été délivré par le lecteur de contrôle d'accès 3, une étape d'instruction lors de laquelle le lecteur de contrôle d'accès 3 modifie l'état de verrouillage de l'élément d'accès 1 auquel il est connecté suite à la réception par ledit lecteur de contrôle d'accès 3 d'une information de commande de l'activation du dispositif de verrouillage pour modifier l'état de verrouillage de l'élément d'accès 1, ladite information de commande étant générée automatiquement suite à au moins une action de l'utilisateur.

Conformément à la présente invention, un tel procédé consiste en outre, suite à l'étape de connexion, à partir du dispositif de contrôle d'accès dans lequel le lecteur de contrôle d'accès 3 comprend un dispositif de détection de présence 6, de préférence comprenant un radar et/ou une caméra, ledit dispositif de détection de présence étant apte à détecter un éloignement et, le cas échéant, aussi un rapprochement de l'utilisateur 4 par rapport audit lecteur de contrôle d'accès 3 :
dès que le dispositif de détection de présence détecte un éloignement de l'utilisateur 4, tant que l'éloignement est détecté ou durant une période prédéterminée, à déconnecter automatiquement et sensiblement instantanément le lecteur de contrôle d'accès 3 de l'appareil portable communicant 2.

On entendra par radar, de l'anglais « radio detection and ranging », un système utilisant les ondes électromagnétiques pour détecter la présence et/ou la position et/ou la vitesse d'un utilisateur 4 se déplaçant dans la zone d'émission avec un appareil portable communiquant 2 et dont les ondes envoyées par l'émetteur du radar sont réfléchies par l'utilisateur, et les signaux de retour sont captés par un récepteur et analysés par l'unité de traitement et de commande. Le récepteur peut être situé sensiblement au même endroit que l'émetteur. De préférence, et comme nous le verrons également par la suite, l'unité de traitement et de commande 3a peut être apte à analyser les paramètres de déplacements suivants de l'utilisateur 4 en vue de déterminer un rapprochement ou un éloignement de ce dernier :
- une distance entre l'utilisateur 4 et le lecteur de contrôle d'accès 2, c'est-à-dire entre l'utilisateur 4 et le récepteur, en mesurant le temps aller/retour du signal réfléchi, et/ou
- une vitesse en mesurant le décalage de fréquence du signal de retour, par exemple selon l'effet Doppler.

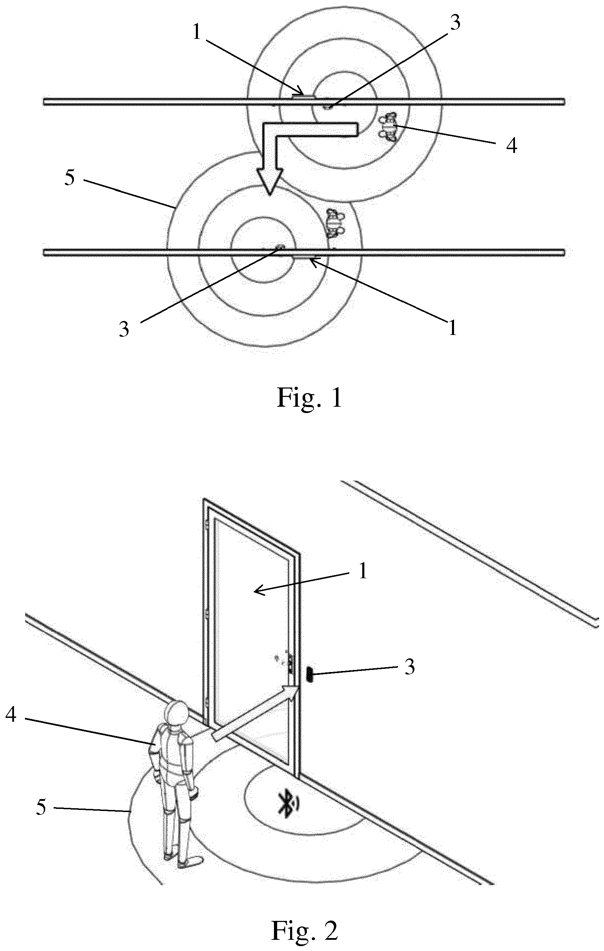

Ainsi, lorsque l'appareil portable communicant 2 se connecte à un mauvais lecteur de contrôle d'accès 3, par exemple lorsque l'utilisateur 4 se trompe d'élément d'accès 1 ou, comme on peut le voir sur la figure 1 où l'appareil communicant 2 est porté par l'utilisateur 4 et non visible sur ladite figure, croise un tiers dans un couloir le détournant vers le mauvais élément d'accès 1, c'est-à-dire l'élément d'accès 1 dont il ne souhaite pas l'ouverture, ce qui entraîne la connexion de son appareil portable communicant 2 avec le mauvais lecteur de contrôle d'accès 3, ce dernier est automatiquement déconnecté de l'appareil portable communicant 2 dès que ledit utilisateur 4 s'éloigne du mauvais lecteur de contrôle d'accès 3 pour s'approcher du bon lecteur de contrôle d'accès 3 associé à l'élément d'accès 1 dont l'utilisateur 4 souhaite l'ouverture pour accéder à l'espace sécurisé correspondant. La connexion de l'appareil portable communicant 2 étant ainsi libérée, celui-ci est de nouveau apte à se connecter au bon lecteur de contrôle d'accès 3.

Lorsque le lecteur de contrôle d'accès 3 est déconnecté de l'appareil portable communicant 2, on comprendra que le dispositif de contrôle d'accès engage de nouveau l'étape de recherche qu'après un certain temps de latence, par exemple quelques secondes ou tant que le dispositif de détection de présence 6 détecte un éloignement de l'utilisateur 4 par rapport audit lecteur de contrôle d'accès 3, auquel il était connecté par erreur. Ainsi, dans le cas ou plusieurs zones de balayage 5 se recoupent et après une connexion non souhaitée de l'appareil portable communicant 2 à un lecteur de contrôle d'accès 3 d'un élément d'accès 1 dont l'ouverture n'est pas souhaitée, ledit appareil portable communicant 2 ne reçoit plus de signaux de recherche provenant dudit lecteur de contrôle d'accès 3, auquel il était connecté par erreur, pendant un certain temps ou tant que le détecteur de présence détecte un éloignement, ce qui supprime l'éventualité qu'une connexion non souhaitée entre le mauvais lecteur de contrôle d'accès 3 et l'appareil portable communicant 2 soit de nouveau établie et empêche alors la connexion avec le lecteur de contrôle d'accès 3 associé au bon élément d'accès 1 dont l'utilisateur 4 souhaite l'ouverture.

En outre, la présente invention peut prévoir que, lorsque le lecteur de contrôle d'accès 3 est connecté à un appareil portable communicant 2, mais qu'aucun utilisateur 4 ne se trouve dans la zone de balayage 5, le lecteur de contrôle d'accès 3 soit déconnecté automatiquement et sensiblement instantanément dudit appareil. Ainsi, les piratages à distance du dispositif de contrôle d'accès mettant en œuvre le procédé selon l'invention sont rendus plus complexes à réaliser.

Le procédé peut consister, à partir du dispositif de détection de présence adapté à cet effet, par exemple à partir du radar du dispositif de détection de présence, à émettre une onde de détection dans la zone de balayage 5 et à réceptionner ladite onde de détection après que celle-ci ait été réfléchie par l'utilisateur 4.

D'autre part, le procédé peut consister, à partir du dispositif de détection de présence adapté à cet effet, par exemple à partir de la caméra du dispositif de détection de présence :
- à acquérir des images de l'utilisateur permettant de détecter un éloignement, ou le cas échéant un rapprochement, de l'utilisateur 4, par rapport audit lecteur de contrôle d'accès 3,
   et/ou
- avant l'étape de connexion, à détecter le visage d'un utilisateur 4 puis, dans l'étape de connexion, à connecter l'appareil portable communicant 2 au lecteur de contrôle d'accès 3 seulement si ledit visage a été détecté. Une telle forme de réalisation du procédé permet, dans le cas d'un recoupement d'au moins deux ondes de recherche provenant d'au moins deux lecteurs de contrôle d'accès 3, de répondre au problème de la présence d'un utilisateur dans la zone de recoupement et, dans ce cas, de permettre uniquement la connexion du bon lecteur de contrôle d'accès 3 à l'appareil portable communiquant 2 de l'utilisateur dans l'étape de recherche, c'est-à-dire du lecteur de contrôle d'accès 3 vers lequel est tourné l'utilisateur pour accéder à ce dernier. Elle permet également de détecter un éloignement de l'utilisateur, le cas échéant son rapprochement avec un dispositif de détection de présence par acquisition d'images et/ou, avec le même dispositif de détection de présence, par exemple comprenant une caméra, de détecter le visage d'un utilisateur.

Selon la présente invention, les ondes de détection et les ondes de recherche émises peuvent être, préférentiellement, des ondes électromagnétiques ou sonores. L'utilisation d'ondes électromagnétiques peut être privilégiée par rapport à une onde sonore pouvant générer un désagrément pour les personnes sensibles à certaines de ces ondes, par exemple aux ultrasons.

Préférentiellement, dans le cas où le dispositif de détection de présence est adapté, par exemple lorsqu'il comprend le radar, pour émettre une onde de détection dans la zone de balayage 5 et à réceptionner ladite onde de détection après que celle-ci ait été réfléchie par l'utilisateur 4, la détection d'un rapprochement ou éloignement de l'utilisateur 4, c'est-à-dire d'un rapprochement ou éloignement de l'utilisateur 4 par rapport au lecteur de contrôle d'accès 3 connecté à l'appareil portable communicant 2 porté par ledit utilisateur 4, peut être réalisée en mesurant une variation de fréquence entre l'onde de détection émise et l'onde de détection réfléchie par l'utilisateur 4, c'est-à-dire par exemple par effet Doppler comme vu précédemment.

Au sens de la présente invention, on comprendra que d'autres paramètres peuvent servir à déterminer la détection d'un rapprochement ou éloignement de l'utilisateur 4 par rapport au lecteur de contrôle d'accès 3 tels que : une vitesse de rapprochement ou d'éloignement correspondant à la vitesse avec laquelle un utilisateur 4 se rapproche ou s'éloigne du lecteur de contrôle d'accès 3, une distance de rapprochement ou d'éloignement correspondant à la distance parcourue par l'utilisateur 4 lors de son rapprochement ou de son éloignement du lecteur de contrôle d'accès 3 et un temps de rapprochement ou d'éloignement correspondant à la durée pendant laquelle l'utilisateur 4 se rapproche ou s'éloigne du lecteur de contrôle d'accès 3.

Le dispositif de détection de présence 6 peut comprendre, par exemple, un capteur de luminosité, thermique ou de pression.

Selon une première forme de réalisation de l'action de l'utilisateur 4 générant l'information de commande de l'activation du dispositif de verrouillage reçue par le lecteur de contrôle d'accès 3 lors de l'étape de communication, celle-ci peut consister en un rapprochement de l'utilisateur 4 ou un positionnement de l'utilisateur 4 à une distance prédéterminée par rapport au lecteur de contrôle d'accès 3. Ainsi, un utilisateur 4 connecté à un lecteur de contrôle d'accès 3 ne peut modifier l'état de verrouillage de l'élément d'accès 1 reliée à ce lecteur qu'en s'approchant ou en étant positionné à la distance prédéterminée et ainsi en confirmant sa volonté de modifier l'état de verrouillage de cet élément d'accès 1. Le risque de provoquer une modification non désirée de l'état de verrouillage d'un élément d'accès 1 est ainsi grandement limité, ce qui ajoute une sécurité supplémentaire. Cette configuration est donc à privilégier dans le cas où une sécurité renforcée est souhaitée.

Ainsi, dans cette première forme de réalisation, un utilisateur 4 portant l'appareil portable communicant 2 n'a aucune action à réaliser pour déverrouiller l'élément d'accès 1 relié au lecteur de contrôle d'accès 3 auquel ledit appareil portable est connecté, mis à part s'approcher dudit lecteur. Cette configuration est donc à privilégier lorsqu'un déverrouillage rapide et simple de l'élément d'accès 1 est souhaité.

Selon une deuxième forme de réalisation de l'action de l'utilisateur 4 générant l'information de commande, c'est-à-dire la commande de l'activation du dispositif de verrouillage, celle-ci peut consister en une action de l'utilisateur 4 effectuée sur l'appareil portable communiquant 2 adapté à cet effet. Une action de l'utilisateur 4 peut être effectuée à l'aide d'un moyen de saisie, par exemple, comme nous le verrons par la suite, du type bouton de commande, virtualisé ou non, de préférence intégré ou enregistré, dans l'appareil communicant 2.

L'information de commande de l'activation du dispositif de verrouillage peut être générée automatiquement, dans ces deux formes de réalisation, par exemple au moyen d'une unité de traitement et de commande 3a. De préférence elle peut être générée automatiquement, suite :
- à partir de la détermination d'une distance de rapprochement de l'utilisateur 4 du lecteur de contrôle d'accès 3, à un rapprochement de l'utilisateur 4 sur une distance supérieure à une distance prédéterminée, ou
- à partir de la détermination d'une durée de rapprochement de l'utilisateur 4, à un rapprochement de l'utilisateur 4 pendant une durée supérieure à une durée prédéterminée, et/ou
- à la détermination, par ledit lecteur de contrôle d'accès 3, d'une distance ou une zone séparant l'utilisateur 4 dudit lecteur de contrôle d'accès 3 inférieure à une valeur de distance prédéterminée.

La modification de l'état de verrouillage de l'élément d'accès 1, suite à la réception d'une information de commande, peut être réalisée par la transmission, au moyen du dispositif de contrôle d'accès 3, d'un signal de commande de modification d'état de verrouillage de l'élément d'accès 1 grâce à une connexion filaire ou une connexion sans fil, par exemple grâce à une connexion Bluetooth.

Le dispositif de verrouillage peut être, par exemple, du type serrure électrique ou électromagnétique, apte à être commandé électriquement ou par voie hertzienne. Un tel dispositif de verrouillage peut être relié fonctionnellement, c'est à dire électriquement ou par voie hertzienne, au lecteur de contrôle d'accès 3 et plus particulièrement à l'unité de traitement et de commande 3a.

De préférence, toujours dans le cas où le dispositif de détection de présence est adapté, par exemple lorsqu'il comprend le radar, pour émettre une onde de détection dans la zone de balayage 5 et à réceptionner ladite onde de détection après que celle-ci ait été réfléchie par l'utilisateur 4, la zone de balayage 5 peut se présenter sous la forme d'un cône ayant son sommet confondu avec le lecteur de contrôle d'accès 3 et présentant un angle au sommet, de préférence, inférieur ou égal à 30° ainsi qu'une hauteur de dimension, de préférence inférieure ou égale à 70 cm. Ladite zone de balayage 5 peut présenter ainsi des dimensions réduites permettant de limiter le chevauchement de plusieurs ondes émises par plusieurs lecteurs de contrôle d'accès 3 différents, ce qui limite fortement un éventuel conflit entre ces ondes et notamment un risque de collision et/ou d'interférence entre ces ondes. Aussi, le nombre de personnes pouvant se trouver dans la zone de balayage 5 à un instant donné est fortement limité et le risque qu'un tiers ne s'interpose entre le lecteur de contrôle d'accès 3 et l'utilisateur 4 est grandement réduit. Il en résulte que le risque que le lecteur de contrôle d'accès 3 ne se déconnecte de l'appareil portable communicant 2 suite à la mesure de l'éloignement d'un tiers est grandement limité et que ce risque est facilement contrôlable par l'utilisateur 4. Enfin, les dimensions réduites de ladite zone de balayage permettent de limiter le risque de connexions intempestives.

Selon une forme de réalisation particulière de la délivrance du droit d'accès du procédé selon l'invention, celui-ci peut comprendre en outre une étape d'identification lors de laquelle l'utilisateur 4 effectue une action d'identification communiquant des informations d'identification à l'appareil portable communicant 2, ladite action d'identification générant automatiquement un signal d'identification communiqué au lecteur de contrôle d'accès 3 qui reconnait, ou non, sur la base des informations transmises par ce signal d'identification, l'utilisateur 4 comme étant un utilisateur 4 identifié, un droit d'accès n'étant délivré par le lecteur de contrôle d'accès 3 que si l'utilisateur 4 est identifié et autorisé. Ainsi, la possession de l'appareil portable communicant 2 ne suffit pas pour obtenir les droits d'accès à l'espace sécurisé, ce qui permet d'éviter les failles de sécurité suite à un vol ou une perte dudit appareil.

De préférence, dans cette forme de réalisation particulière de délivrance du droit d'accès du procédé selon l'invention, l'action d'identification peut consister, de préférence grâce à l'appareil portable communiquant 2 adapté à cet effet, à identifier les empreintes digitales de l'utilisateur ou à entrer un code d'identification personnel, tel qu'un code PIN ou à la prise d'empreintes digitales ou à une reconnaissance faciale ou à une combinaison de ces actions. On comprendra que le code ou les empreintes digitales ou la reconnaissance faciale peuvent être entrés ou saisis dans l'appareil portable communiquant 2 adapté à cet effet.

De préférence, les informations d'identification sont exclusivement traitées par l'appareil portable communicant 2 et ne sont donc pas communiquées à l'extérieur dudit appareil. Ainsi, les données personnelles de l'utilisateur 4 sont protégées.

Selon une spécificité de cette forme de réalisation particulière, le lecteur de contrôle d'accès 3 peut assembler les informations transmises par le signal d'identification et les informations d'authentification de l'appareil portable communicant 2 dans un couple, dit couple d'authentification et d'identification, afin de comparer ce couple à des couples d'authentification et d'identification de référence contenus dans une banque de données, ledit lecteur de contrôle d'accès 3 ne reconnaissant alors un droit d'accès que lorsqu'une correspondance entre le couple d'authentification et d'identification transmis par l'appareil portable communicant 2 et l'un des couples d'authentification et d'identification de référence est trouvée. Ainsi, chaque appareil portable communicant 2 peut être propre à un seul utilisateur 4, un utilisateur 4 portant un appareil portable communicant 2 ne lui appartenant pas ne pouvant alors accéder à l'espace sécurisé. Il devient ainsi possible d'authentifier et d'identifier clairement la personne accédant à l'espace sécurisé et d'éviter les usurpations d'identité.

De préférence, le lecteur de contrôle d'accès 3 enregistre chaque couple d'authentification et d'identification formé dans une mémoire afin notamment de conserver des couples d'authentification et d'identification non autorisés pouvant ensuite être relevés par un opérateur dans le cadre d'un contrôle de sécurité.

Avantageusement, à partir du dispositif de contrôle d'accès dans lequel l'au moins un appareil portable communicant 2, pouvant consister en un téléphone mobile, également connu sous le nom de téléphone portable ou cellulaire ou sous la dénomination anglaise de smartphone, l'étape de confirmation d'identité est réalisée par l'intermédiaire d'une application mobile installée sur ledit au moins un téléphone mobile. L'utilisation d'une application mobile permet une prise en main intuitive et une mise en œuvre simple du procédé selon l'invention ainsi que des différentes actions d'identification.

De préférence, l'étape de recherche peut être réalisée en émettant un signal radio de recherche selon une norme de communication, de préférence Bluetooth, RFID ou NFC, permettant un échange de données bidirectionnel à très courte distance entre l'appareil portable communicant 2 et le lecteur de contrôle d'accès 3.

Ainsi, le dispositif de contrôle d'accès, selon la présente invention, dans au moins un espace sécurisé fermé par au moins un élément d'accès 1 muni d'un dispositif de verrouillage, ledit dispositif de contrôle d'accès convenant à la mise en œuvre du procédé selon la présente invention et comprend au moins un appareil portable communicant 2 destiné à être porté par un utilisateur 4 et au moins un lecteur de contrôle d'accès 3 destiné à être connecté fonctionnellement au ou à l'un des dispositifs de verrouillage, le ou chaque lecteur de contrôle d'accès 3 comprenant :
- des moyens d'émission d'une onde de recherche sur une zone donnée, dite zone de balayage 5,
- des moyens de connexion permettant de connecter le lecteur de contrôle d'accès 3 avec le ou l'un des appareil(s) portable(s) communicant 2 situé dans ladite zone de balayage 5 pour échanger des informations avec ce dernier,
- une unité de traitement et de commande 3a apte, d'une part, à recevoir et traiter des informations d'authentification provenant de l'appareil portable communiquant 2 lorsque celui-ci est connecté au lecteur de contrôle d'accès 3 et à délivrer, ou non, sur la base de ces informations d'authentification, un droit d'accès audit appareil portable communicant 2 et, d'autre part, suite à ladite délivrance du droit d'accès et à la réception de d'une information de commande de l'activation du dispositif de verrouillage, à commander l'activation du dispositif de verrouillage pour modifier l'état de verrouillage de l'élément d'accès 1 correspondant.

Conformément à la présente invention, dans un tel dispositif de contrôle d'accès, le ou chaque lecteur de contrôle d'accès 3 comprend en outre un dispositif de détection de présence 6, par exemple comprenant un radar et/ou une caméra, apte à détecter un éloignement et, le cas échéant, aussi un rapprochement de l'utilisateur 4 par rapport audit lecteur de contrôle d'accès 3 et à transmettre un signal représentatif de ladite détection, et en ce que ladite unité de traitement et de commande 3a est en outre apte, d'une part, à recevoir le signal représentatif de la détection et à analyser ledit signal pour déterminer si l'utilisateur 4 s'approche ou s'éloigne du lecteur de contrôle d'accès 3 et, si ladite unité de traitement et de commande 3a détermine que l'utilisateur 4 s'éloigne, à envoyer un signal de déconnexion ayant pour effet de déconnecter sensiblement instantanément, suite à ladite détection d'éloignement, le lecteur de contrôle d'accès 3 de l'appareil portable communicant 2 correspondant, et, d'autre part, à maintenir l'état de déconnexion tant que les moyens d'acquisition déterminent un éloignement de l'utilisateur 4 ou durant une période prédéterminée.

Le dispositif de détection de présence peut être apte, par exemple grâce au radar, à émettre une onde de détection et à détecter une réflexion de cette dernière sur l'utilisateur 4 de l'appareil portable communicant 2 connecté au lecteur de contrôle d'accès 3.

Le dispositif peut être apte, par exemple grâce à la caméra, à détecter le visage d'un utilisateur 4 et l'unité de traitement et de commande 3a peut être apte, dans l'étape de connexion, à connecter l'appareil portable communicant 2 au lecteur de contrôle d'accès 3 seulement si ledit visage a été détecté.

On comprendra que le dispositif de détection peut comprendre, selon l'une et/ou l'autre des formes de réalisation suivantes :
- une caméra, ce qui permet de détecter l'éloignement et, le cas échéant aussi le rapprochement, par acquisition d'images de l'utilisateur et/ou, avec la même caméra, de détecter éventuellement le visage d'un utilisateur selon le procédé décrit précédemment,
- un radar, ce qui permet de détecter l'éloignement et, le cas échéant aussi le rapprochement, par émission et réflexion d'une onde sur l'utilisateur selon le procédé décrit précédemment,
- une caméra et un radar, permettant de combiner les détections précédentes avec deux moyens différents, dont l'un, la caméra peut être prévue pour la détection du visage et l'autre, le radar, pour la détection de l'éloignement ou du rapprochement. Bien entendu, dans ce cas la caméra peut aussi être prévue pour réaliser la détection de l'éloignement ou du rapprochement.

Grâce à la mise en œuvre du procédé selon l'invention par le dispositif de contrôle d'accès, il est possible de positionner les lecteurs de contrôle d'accès 3 sans se soucier d'un éventuel recouvrement des zones de balayage 5, ce qui facilite leur agencement et leur mise en place.

De préférence, l'unité de traitement et de commande 3a peut être apte à mesurer une variation de fréquence entre l'onde de détection émise et l'onde de détection réfléchie par l'utilisateur 4. Elle peut également être apte à mesurer d'autres paramètres tels que tels qu'une distance et/ou une vitesse et/ou un temps de rapprochement et/ou d'éloignement de l'utilisateur 4 par rapport au lecteur de contrôle d'accès 3.

L'appareil portable communicant 2 peut comprendre en outre des moyens de saisie, non représentés, de l'information de commande de l'activation du dispositif de déverrouillage, lesdits moyens de saisie pouvant être aptes à permettre l'action de l'utilisateur. En outre, l'appareil portable communicant 2 ou le lecteur de contrôle d'accès 3, grâce à l'unité de traitement et de commande 3a, peut être apte à interpréter ladite information de commande ainsi saisie pour générer automatiquement le signal de commande de l'activation du dispositif de verrouillage si le dispositif de détection de présence détecte, postérieurement à la réception de ladite information de commande, un rapprochement de l'utilisateur 4. Les moyens de saisie peuvent consister, par exemple, en un bouton de commande qui peut être, par exemple, virtualisé à l'aide d'une application informatique spécifique enregistrée dans l'appareil portable communicant 2.

L'unité de traitement et de commande 3a peut être apte à comparer une distance de rapprochement avec une distance de rapprochement prédéterminée et/ou à comparer une durée de rapprochement avec une durée de rapprochement prédéterminée et/ou à comparer une distance séparant l'utilisateur 4 du lecteur de contrôle d'accès 3 avec une distance minimale.

De façon préférentielle, le dispositif de contrôle d'accès peut comprendre en outre des moyens de saisie d'une information d'identification permettant l'action d'identification et l'unité de traitement et de commande 3a peut être apte à analyser le signal d'identification transmettant l'information d'identification pour identifier l'utilisateur 4. Le ou chaque lecteur de contrôle d'accès 3 peut ainsi être apte à identifier un utilisateur 4 portant l'appareil portable communicant 2 et à ne délivrer un droit d'accès audit appareil que lorsque l'utilisateur 4 est une personne autorisée à accéder à l'espace sécurisé. De préférence, les moyens de saisie peuvent être intégrés ou compris dans l'appareil portable communicant 2.

Préférentiellement, le dispositif de contrôle d'accès peut comprendre un moyen de sélection de modes de fonctionnement permettant de sélectionner soit un premier mode de fonctionnement du dispositif de contrôle d'accès, dit mode de simple authentification, dans lequel le procédé de contrôle d'accès mis en œuvre ne comprend pas d'étape de d'identification, également appelée confirmation d'identité, soit un second mode de fonctionnement du dispositif de contrôle d'accès, dit mode de double authentification, dans lequel le procédé de contrôle d'accès mis en œuvre comprend une étape d'identification ou confirmation d'identité. Il est ainsi possible d'adapter les conditions permettant la délivrance d'un droit d'accès en fonction du niveau de protection souhaité pour l'espace fermé par l'élément d'accès 1. Un tel moyen de sélection peut, être intégré dans le lecteur de contrôle d'accès 3a.

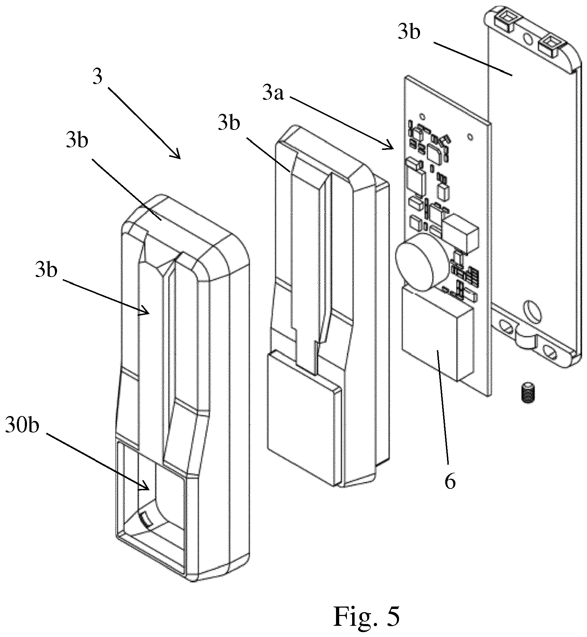

De préférence, le dispositif de détection de présence 6 et/ou l'unité de traitement et de commande 3a peuvent être intégrés dans au moins une carte électronique montée dans le lecteur de contrôle d'accès 3 (figure 5).

On comprendra que l'unité de traitement et de commande 3a peut comprendre une ou plusieurs cartes électroniques, c'est-à-dire un ou plusieurs circuits électroniques, pouvant comprendre un ou plusieurs microprocesseurs et des mémoires stockant le ou les programmes nécessaires, permettant de réaliser l'ensemble des fonctionnalités de traitement, de commande, et de réception des informations d'authentification et/ou d'identification et des informations de détection, de l'unité de traitement et de commande 3a. De façon avantageuse, l'unité de traitement et de commande 3a peut comprendre en outre une mémoire et être apte à enregistrer dans ladite mémoire des couples d'authentification et d'identification tels que définis précédemment selon le procédé de la présente invention. L'unité de traitement de et de commande 3a peut ainsi être apte à comparer un couple d'authentification formé suite à la connexion d'un appareil portable communicant 2 avec les couples d'authentification présents dans ladite mémoire et à ne délivrer un droit d'accès audit appareil que lorsqu'une correspondance est trouvée.

De préférence, l'appareil portable communicant 2 peut consister en un téléphone portable, plus particulièrement un téléphone portable ou cellulaire, communément connu sous le nom anglais de smartphone. Ce téléphone portable peut matérialiser un clavier virtuel permettant d'entrer au moins une information de commande de l'activation du dispositif de verrouillage ou un code d'identification. Le téléphone portable peut comprendre un système de prise d'empreinte digitale pouvant comprendre, par exemple, un écran tactile et/ou un système de prise d'image, généralement déjà intégré dans les appareils portables communicant 2 actuels, permettant de réaliser une reconnaissance faciale. Son utilisation permet donc de saisir aisément des informations de d'identification et de réaliser simplement un grand nombre d'actions d'identification.

Les moyens de saisie d'une information de commande de l'activation du dispositif de déverrouillage peuvent consister plus particulièrement en un bouton de commande, de préférence intégré dans l'appareil portable communiquant 2. Un tel bouton peut être une touche sensitive ou tactile intégré dans l'appareil portable communiquant 2 et visible sur un écran d'affichage que comprend ce dernier.

En outre, le ou chaque lecteur de contrôle d'accès 3 et le ou chaque appareil portable communicant 2 peuvent être aptes à communiquer entre eux selon une norme ou un protocole de communication, de préférence Bluetooth ou RFID, permettant un échange de données bidirectionnel à très courte distance.

Si on se réfère à la figure 5, on peut voir que le lecteur de contrôle d'accès 3 peut comprendre un boîtier 3b renfermant l'unité de traitement et de commande 3a et le dispositif de détection de présence 6. Le boîtier 3b peut comprendre une lumière ou une paroi 30b apte à laisser passer l'onde de détection émise et reçue par le dispositif de détection de présence 6. La lumière ou paroi 30 b peut être pratiquée dans la face frontale 30c du boîtier 3b, de préférence en regard du dispositif de détection de présence 6. La lumière 30b peut également être prévue pour recevoir au moins la partie émettrice et réceptrice de l'onde de détection émise par le dispositif de détection de présence 6.

Bien entendu, l'invention n'est pas limitée au mode de réalisation décrit et représenté aux dessins annexés. Des modifications restent possibles sans sortir pour autant de la portée des revendications.

## Revendications

1. Procédé de contrôle d'accès dans au moins un espace sécurisé fermé par au moins un élément d'accès (1) muni d'un dispositif de verrouillage, ledit procédé consistant à réaliser, à l'aide d'un dispositif de contrôle d'accès comprenant au moins un appareil portable communicant (2) destiné à être porté par un utilisateur (4) et au moins un lecteur de contrôle d'accès (3) dédié audit élément d'accès et destiné à être connecté au dispositif de verrouillage correspondant, les étapes suivantes de contrôle d'accès :
- une étape de recherche lors de laquelle le lecteur de contrôle d'accès (3) émet une onde de recherche dans une zone donnée, dite zone de balayage (5),
- une étape de connexion lors de laquelle un appareil portable communicant (2) situé dans la zone de balayage (5) capte l'onde de recherche et se connecte au lecteur de contrôle d'accès (3) par liaison radio,
- une étape d'authentification lors de laquelle l'appareil portable communicant (2) ainsi connecté communique des informations d'authentification audit lecteur de contrôle d'accès (3) qui délivre, ou non, sur la base de ces informations, un droit d'accès audit appareil portable communicant (2),
- si un droit d'accès a été délivré par le lecteur de contrôle d'accès (3), une étape d'instruction lors de laquelle le lecteur de contrôle d'accès (3) modifie l'état de verrouillage de l'élément d'accès (1) auquel il est connecté suite à la réception par ledit lecteur de contrôle d'accès (3) d'une information de commande de l'activation du dispositif de verrouillage pour modifier l'état de verrouillage de l'élément d'accès (1), ladite information de commande étant générée automatiquement suite à au moins une action de l'utilisateur,
procédé **caractérisé en ce qu'**il consiste en outre, suite à l'étape de connexion, à partir du dispositif de contrôle d'accès dans lequel le lecteur de contrôle d'accès (3) comprend un dispositif de détection de présence (6), de préférence comprenant un radar et/ou une caméra, ledit dispositif de détection de présence étant apte à détecter un éloignement et, le cas échéant, aussi un rapprochement de l'utilisateur (4) par rapport audit lecteur de contrôle d'accès (3) :
dès que le dispositif de détection de présence détecte un éloignement de l'utilisateur (4), tant que l'éloignement est détecté ou durant une période prédéterminée, à déconnecter automatiquement et sensiblement instantanément le lecteur de contrôle d'accès (3) de l'appareil portable communicant (2).

2. Procédé de contrôle d'accès, selon la revendication 1, **caractérisé en ce qu'**il consiste, à partir du dispositif de détection de présence adapté à cet effet, par exemple à partir du radar du dispositif de détection de présence, à émettre une onde de détection dans la zone de balayage (5) et à réceptionner ladite onde de détection après que celle-ci ait été réfléchie par l'utilisateur (4).

3. Procédé de contrôle d'accès selon la revendication 2, **caractérisé en ce que** la détection d'un rapprochement ou éloignement de l'utilisateur (4) est réalisée en mesurant une variation de fréquence entre l'onde de détection émise et l'onde de détection réfléchie par l'utilisateur (4).

4. Procédé de contrôle d'accès selon l'une quelconque des revendications 2 à 3, **caractérisé en ce que** l'onde de détection se présente sous la forme d'un cône ayant son sommet confondu avec le lecteur de contrôle d'accès (3) et présentant un angle au sommet inférieur ou égal à 30° ainsi qu'une hauteur de dimension inférieure ou égale à 70 cm.

5. Procédé de contrôle d'accès selon l'une quelconque des revendications 1 à 4, **caractérisé en ce qu'**il consiste, à partir du dispositif de détection de présence adapté à cet effet, par exemple à partir de la caméra du dispositif de détection de présence :
- à acquérir des images de l'utilisateur (4) afin de pouvoir détecter un éloignement éventuel de ce dernier et, le cas échéant, un rapprochement de l'utilisateur (4), par rapport audit lecteur de contrôle d'accès (3),
et/ou
- avant l'étape de connexion, à détecter le visage d'un utilisateur (4) puis, dans l'étape de connexion, à connecter l'appareil portable communicant (2) au lecteur de contrôle d'accès (3) seulement si ledit visage a été détecté.

6. Procédé de contrôle d'accès selon l'une quelconque des revendications 1 à 2, **caractérisé en ce que** l'action de l'utilisateur (4) générant l'information de commande consiste en un rapprochement de l'utilisateur (4).

7. Procédé de contrôle d'accès selon l'une quelconque des revendications 1 à 6, **caractérisé en ce que** l'action de commande de l'utilisateur (4) consiste en une action de l'utilisateur (4) effectuée sur l'appareil portable communiquant adapté à cet effet.

8. Procédé de contrôle d'accès selon l'une quelconque des revendications 1 à 7, **caractérisé en ce qu'**il comprend en outre une étape d'identification lors de laquelle l'utilisateur (4) effectue une action d'identification, de préférence effectuée à partir de l'appareil communiquant, communiquant des informations d'identification à l'appareil portable communicant (2), ladite action d'identification générant automatiquement un signal d'identification communiqué au lecteur de contrôle d'accès (3) qui reconnait, ou non, sur la base des informations transmises par ce signal d'identification, l'utilisateur (4) comme étant un utilisateur (4) identifié et **en ce que** le droit d'accès n'est délivré par le lecteur de contrôle d'accès (3) que si l'utilisateur (4) est identifié et autorisé.

9. Procédé de contrôle d'accès selon la revendication 8, **caractérisé en ce que** l'action d'identification consiste, à partir de l'appareil portable communiquant (2) adapté à cet effet, à identifier les empreintes digitales de l'utilisateur ou à entrer un code d'identification personnel, tel qu'un code PIN ou à la prise d'empreintes digitales ou à une reconnaissance faciale ou à une combinaison de ces actions.

10. Procédé de contrôle d'accès selon la revendication 8 ou 9, **caractérisé en ce que** le lecteur de contrôle d'accès (3) assemble les informations transmises par le signal d'identification et les informations d'authentification de l'appareil portable communicant (2) dans un couple, dit couple d'authentification et d'identification, afin de comparer ce couple à des couples d'authentification et d'identification de référence contenus dans une banque de données, et **en ce que** le lecteur de contrôle d'accès (3) ne reconnait un droit d'accès que lorsqu'une correspondance entre le couple d'authentification et d'identification transmis par l'appareil portable communicant (2) et l'un des couples d'authentification et d'identification de référence est trouvée.

11. Procédé de contrôle d'accès selon l'une quelconque des revendications 8 à 10, **caractérisé en ce que**, à partir du dispositif de contrôle d'accès dans lequel l'appareil portable communicant (2) consiste en un téléphone mobile, l'étape d'identification est réalisée par l'intermédiaire d'une application mobile installée sur ledit au moins un téléphone mobile (2).

12. Procédé de contrôle d'accès, selon l'une quelconque des revendications 1 à 11, **caractérisé en ce que** l'étape de recherche est réalisée en émettant un signal radio de recherche selon une norme de communication, de préférence Bluetooth, RFID ou NFC, permettant un échange de données bidirectionnel, de préférence à très courte distance, entre l'appareil portable communicant (2) et le lecteur de contrôle d'accès (3).

13. Dispositif de contrôle d'accès dans au moins un espace sécurisé fermé par au moins un élément d'accès (1) munie d'un dispositif de verrouillage, ledit dispositif convenant à la mise en œuvre du procédé selon l'une quelconque des revendications 1 à 12 et comprenant au moins un appareil portable communicant (2) destiné à être porté par un utilisateur (4) et au moins un lecteur de contrôle d'accès (3) destiné à être connecté fonctionnellement au ou à l'un des dispositifs de verrouillage, le ou chaque lecteur de contrôle d'accès (3) comprenant :
- des moyens d'émission d'une onde de recherche sur une zone donnée, dite zone de balayage (5),
- des moyens de connexion permettant de connecter le lecteur de contrôle d'accès (3) avec le ou l'un des appareil(s) portable(s) communicant (2) situé dans ladite zone de balayage (5) pour échanger des informations avec ce dernier,
- une unité de traitement et de commande (3a) apte à recevoir et traiter des informations d'authentification provenant de l'appareil portable communicant (2) lorsque celui-ci est connecté au lecteur de contrôle d'accès (3) et à délivrer, ou non, sur la base de ces informations d'authentification, un droit d'accès audit appareil portable communicant (2) et, suite à ladite délivrance du droit d'accès et à la réception d'une information de commande de l'activation du dispositif de verrouillage, à commander l'activation du dispositif de verrouillage pour modifier l'état de verrouillage de l'élément d'accès (1) correspondant,
dispositif de contrôle d'accès **caractérisé en ce que** le ou chaque lecteur de contrôle d'accès (3) comprend en outre :
- un dispositif de détection de présence (6), par exemple comprenant un radar et/ou une caméra, apte à détecter un éloignement et, le cas échéant, aussi un rapprochement de l'utilisateur (4) par rapport audit lecteur de contrôle d'accès (3) et à transmettre un signal représentatif de ladite détection, et **en ce que** ladite unité de traitement et de commande (3a) est en outre apte, d'une part, à recevoir le signal représentatif de la détection et à analyser ledit signal pour déterminer si l'utilisateur (4) s'approche ou s'éloigne du lecteur de contrôle d'accès (3) et, si ladite unité de traitement et de commande (3a) détermine que l'utilisateur (4) s'éloigne, à envoyer un signal de déconnexion ayant pour effet de déconnecter sensiblement instantanément, suite à ladite détection d'éloignement, le lecteur de contrôle d'accès (3) de l'appareil portable communicant (2) correspondant, et, d'autre part, à maintenir l'état de déconnexion tant que les moyens d'acquisition déterminent un éloignement de l'utilisateur (4) ou durant une période prédéterminée.

14. Dispositif de contrôle d'accès selon la revendication 13 **caractérisé en ce que** le dispositif de détection de présence est apte, par exemple grâce au radar, à émettre une onde de détection et à détecter une réflexion de cette dernière sur l'utilisateur (4) de l'appareil portable communicant (2) connecté au lecteur de contrôle d'accès (3).

15. Dispositif de contrôle d'accès selon la revendication 14, **caractérisé en ce que** l'unité de traitement et de commande (3a) est apte à mesurer une variation de fréquence entre l'onde de détection émise et l'onde de détection réfléchie par l'utilisateur (4) permettant la mise en œuvre du procédé selon la revendication 3.

16. Dispositif de contrôle d'accès, selon l'une quelconque des revendications 13 à 15, **caractérisé en ce qu'**il est apte, par exemple grâce à la caméra, à détecter le visage d'un utilisateur (4) et **en ce que** l'unité de traitement et de commande (3a) est apte, dans l'étape de connexion, à connecter l'appareil portable communicant (2) au lecteur de contrôle d'accès (3) seulement si ledit visage a été détecté.

17. Dispositif de contrôle d'accès selon l'une quelconque des revendications 13 à 16, **caractérisé en ce qu'**il comprend en outre des moyens de saisie de l'information de commande de l'activation du dispositif de déverrouillage et apte à émettre ladite information vers le lecteur de contrôle d'accès (3) en vue de son traitement par l'unité de traitement et de commande (3a), lesdits moyens de saisie étant, de préférence, intégrés ou compris dans l'appareil portable communicant (2).

18. Dispositif de contrôle d'accès selon l'une quelconque des revendications 13 à 17, **caractérisé en ce qu'**il comprend en outre des moyens de saisie d'une information d'identification, de préférence intégrés ou compris dans l'appareil portable communicant (2), permettant l'action d'identification définie dans les revendications 8 à 10, l'unité de traitement et de commande (3a) étant en outre apte à analyser le signal d'identification transmettant ladite information d'identification pour identifier l'utilisateur (4).

19. Dispositif de contrôle d'accès selon l'une quelconque des revendications 13 à 18, **caractérisé en ce qu'**il comprend en outre un moyen de sélection de modes de fonctionnement, de préférence intégré dans le lecteur de contrôle d'accès (3), permettant de sélectionner soit un premier mode de fonctionnement du dispositif de contrôle d'accès, dit mode de simple authentification, dans lequel le procédé de contrôle d'accès mis en œuvre ne comprend pas l'étape d'identification définie dans l'une quelconque des revendications 8 à 10, soit un second mode de fonctionnement du dispositif de contrôle d'accès, dit mode de double authentification, dans lequel le procédé de contrôle d'accès mis en œuvre comprend l'étape d'identification telle que définie dans l'une quelconque des revendications 8 à 10.

20. Dispositif de contrôle d'accès selon l'une quelconque des revendications 13 à 19, **caractérisé en ce que** l'unité de traitement et de commande (3a) comprend en outre une mémoire et est apte à enregistrer dans ladite mémoire des couples d'authentification et d'identification, permettant ainsi la mise en œuvre du procédé selon la revendication 8.

21. Dispositif de contrôle d'accès selon l'une quelconque des revendications 13 à 20, **caractérisé en ce que** l'appareil portable communicant (2) consiste en un téléphone portable ou cellulaire.

22. Dispositif de contrôle d'accès, selon l'une quelconque des revendications 13 à 21, **caractérisé en ce que** le ou chaque lecteur de contrôle d'accès (3) et le ou chaque appareil portable communicant (2) sont aptes à communiquer entre eux selon une norme ou un protocole de communication, de préférence Bluetooth ou RFID, permettant un échange de données bidirectionnel à très courte distance tel que défini dans la revendication 12.

## Patentansprüche

1. Zugangskontrollverfahren zu mindestens einem durch mindestens ein mit einer Verriegelungsvorrichtung versehenes Zugangselement (1) verschlossenen gesicherten Raum, wobei das Verfahren darin besteht, mit Hilfe einer Zugangskontrollvorrichtung, die mindestens ein kommunizierendes tragbares Gerät (2), das dazu bestimmt ist, von einem Benutzer (4) getragen zu werden, und mindestens ein Zugangskontrolle-Lesegerät (3) enthält, das für das Zugangselement spezifisch und dazu bestimmt ist, mit der entsprechenden Verriegelungsvorrichtung verbunden zu werden, die folgenden Zugangskontrollschritte durchzuführen:
- einen Suchschritt, während dessen das Zugangskontrolle-Lesegerät (3) eine Suchwelle in einer gegebenen Zone, Abtastzone (5) genannt, sendet,
- einen Verbindungsschritt, während dessen ein in der Abtastzone (5) befindliches kommunizierendes tragbares Gerät (2) die Suchwelle auffängt und sich durch Funkverbindung mit dem Zugangskontrolle-Lesegerät (3) verbindet,
- einen Authentifizierungsschritt, während dessen das so verbundene kommunizierende tragbare Gerät (2) dem Zugangskontrolle-Lesegerät (3) Authentifizierungsinformationen mitteilt, das auf der Basis dieser Informationen dem kommunizierenden tragbaren Gerät (2) ein Zugangsrecht erteilt oder nicht,
- wenn ein Zugangsrecht vom Zugangskontrolle-Lesegerät (3) erteilt wurde, einen Anweisungsschritt, während dessen das Zugangskontrolle-Lesegerät (3) den Verriegelungszustand des Zugangselements (1), mit dem es verbunden ist, nach Empfang durch das Zugangskontrolle-Lesegerät (3) einer Steuerinformation der Aktivierung der Verriegelungsvorrichtung zum Ändern des Verriegelungszustands des Zugangselements (1) ändert, wobei die Steuerinformation nach mindestens einer Aktion des Benutzers automatisch generiert wird,
wobei das Verfahren **dadurch gekennzeichnet ist, dass** es außerdem nach dem Verbindungsschritt, ausgehend von der Zugangskontrollvorrichtung, in der das Zugangskontrolle-Lesegerät (3) eine Anwesenheitserkennungsvorrichtung (6) enthält, die vorzugsweise einen Radar und/oder eine Kamera enthält, wobei die Anwesenheitserkennungsvorrichtung ein Entfernen und ggf. auch ein Annähern des Benutzers (4) bezüglich des Zugangskontrolle-Lesegeräts (3) erfassen kann, darin besteht:
sobald die Anwesenheitserkennungsvorrichtung ein Entfernen des Benutzers (4) erkennt, solange das Entfernen erkannt wird oder während einer vorbestimmten Dauer, das Zugangskontrolle-Lesegerät (3) automatisch und im Wesentlichen augenblicklich vom kommunizierenden tragbaren Gerät (2) zu trennen.

2. Zugangskontrollverfahren nach Anspruch 1, **dadurch gekennzeichnet, dass** es ausgehend von der für diesen Zweck geeigneten Anwesenheitserkennungsvorrichtung, zum Beispiel ausgehend vom Radar der Anwesenheitserkennungsvorrichtung, darin besteht, eine Erkennungswelle in die Abtastzone (5) zu senden und die Erkennungswelle zu empfangen, nachdem diese vom Benutzer (4) reflektiert wurde.

3. Zugangskontrollverfahren nach Anspruch 2, **dadurch gekennzeichnet, dass** die Erkennung eines Annäherns oder Entfernens des Benutzers (4) durch Messung einer Frequenzabweichung zwischen der gesendeten Erkennungswelle und der vom Benutzer (4) reflektierten Erkennungswelle durchgeführt wird.

4. Zugangskontrollverfahren nach einem der Ansprüche 2 bis 3, **dadurch gekennzeichnet, dass** die Erkennungswelle in Form eines Kegels vorliegt, dessen Scheitel mit dem Zugangskontrolle-Lesegerät (3) zusammenfällt und der einen Scheitelwinkel geringer als oder gleich 30° sowie eine Abmessungshöhe geringer als oder gleich 70 cm hat.

5. Zugangskontrollverfahren nach einem der Ansprüche 1 bis 4, **dadurch gekennzeichnet, dass** es ausgehend von der für diesen Zweck geeigneten Anwesenheitserkennungsvorrichtung, zum Beispiel ausgehend von der Kamera der Anwesenheitserkennungsvorrichtung, darin besteht:
- Bilder des Benutzers (4) zu erfassen, um ein mögliches Entfernen dieses letzteren und ggf. ein Annähern des Benutzers (4) bezüglich des Zugangskontrolle-Lesegeräts (3) erkennen zu können,
und/oder
- vor dem Verbindungsschritt das Gesicht eines Benutzers (4) zu erkennen, dann im Verbindungsschritt das kommunizierende tragbare Gerät (2) mit dem Zugangskontrolle-Lesegerät (3) nur zu verbinden, wenn das Gesicht erkannt wurde.

6. Zugangskontrollverfahren nach einem der Ansprüche 1 bis 2, **dadurch gekennzeichnet, dass** die Aktion des Benutzers (4), die die Steuerinformation generiert, aus einem Annähern des Benutzers (4) besteht.

7. Zugangskontrollverfahren nach einem der Ansprüche 1 bis 6, **dadurch gekennzeichnet, dass** die Steueraktion des Benutzers (4) aus einer Aktion des Benutzers (4) besteht, die auf dem für diesen Zweck geeigneten kommunizierenden tragbaren Gerät ausgeführt wird.

8. Zugangskontrollverfahren nach einem der Ansprüche 1 bis 7, **dadurch gekennzeichnet, dass** es außerdem einen Identifizierungsschritt enthält, in dem der Benutzer (4) eine vorzugsweise ausgehend vom kommunizierenden Gerät ausgeführte Identifizierungsaktion ausführt, die dem kommunizierenden tragbaren Gerät (2) Identifizierungsinformationen mitteilt, wobei die Identifizierungsaktion automatisch ein dem Zugangskontrolle-Lesegerät (3) mitgeteiltes Identifizierungssignal generiert, das auf der Basis der von diesem Identifizierungssignal übertragenen Informationen den Benutzer (4) als einen identifizierten Benutzer (4) erkennt oder nicht, und dass das Zugangsrecht nur vom Zugangskontrolle-Lesegerät (3) erteilt wird, wenn der Benutzer (4) identifiziert und berechtigt ist.

9. Zugangskontrollverfahren nach Anspruch 8, **dadurch gekennzeichnet, dass** die Identifizierungsaktion ausgehend vom für diesen Zweck geeigneten kommunizierenden tragbaren Gerät (2) aus der Identifizierung der Fingerabdrücke des Benutzers oder der Eingabe eines persönlichen Identifizierungscodes wie eines PIN-Codes oder der Abnahme von Fingerabdrücken oder einer Gesichtserkennung oder eine Kombination dieser Aktionen besteht.

10. Zugangskontrollverfahren nach Anspruch 8 oder 9, **dadurch gekennzeichnet, dass** das Zugangskontrolle-Lesegerät (3) die durch das Identifizierungssignal übertragenen Informationen und die Authentifizierungsinformationen des kommunizierenden tragbaren Geräts (2) in einem Paar zusammenfügt, Authentifizierungs- und Identifizierungspaar genannt, um dieses Paar mit in einer Datenbank enthaltenen Authentifizierungs- und Identifizierungsbezugspaaren zu vergleichen, und dass das Zugangskontrolle-Lesegerät (3) ein Zugangsrecht nur erkennt, wenn eine Entsprechung zwischen dem vom kommunizierenden tragbaren Gerät (2) übertragenen Authentifizierungs- und Identifizierungspaar und einem der Authentifizierungs- und Identifizierungsbezugspaare gefunden wird.

11. Zugangskontrollverfahren nach einem der Ansprüche 8 bis 10, **dadurch gekennzeichnet, dass** ausgehend von der Zugangskontrollvorrichtung, in der das kommunizierende tragbare Gerät (2) aus einem Mobiltelefon besteht, der Identifizierungsschritt mittels einer Mobilanwendung durchgeführt wird, die auf dem mindestens einen Mobiltelefon (2) installiert ist.

12. Zugangskontrollverfahren, nach einem der Ansprüche 1 bis 11, **dadurch gekennzeichnet, dass** der Suchschritt durchgeführt wird, indem ein Suchfunksignal gemäß einer Kommunikationsnorm, vorzugsweise Bluetooth, RFID oder NFC, gesendet wird, die einen bidirektionalen Datenaustausch, vorzugsweise in sehr kurzer Entfernung, zwischen dem kommunizierenden tragbaren Gerät (2) und dem le Zugangskontrolle-Lesegerät (3) erlaubt.

13. Zugangskontrollvorrichtung zu mindestens einem durch mindestens ein mit einer Verriegelungsvorrichtung versehenes Zugangselement (1) verschlossenen gesicherten Raum, wobei die Vorrichtung für die Durchführung des Verfahrens nach einem der Ansprüche 1 bis 12 geeignet ist und mindestens ein kommunizierendes tragbares Gerät (2), das dazu bestimmt ist, von einem Benutzer (4) getragen zu werden, und mindestens ein Zugangskontrolle-Lesegerät (3) enthält, das dazu bestimmt ist, funktional mit der oder einer der Verriegelungsvorrichtungen verbunden zu werden, wobei das oder jedes Zugangskontrolle-Lesegerät (3) enthält:
- Sendeeinrichtungen einer Suchwelle in eine gegebene Zone, Abtastzone (5) genannt,
- Verbindungseinrichtungen, die es ermöglichen, das Zugangskontrolle-Lesegerät (3) mit dem oder den in der Abtastzone (5) befindlichen kommunizierenden tragbaren Gerät(en) zu verbinden, um Informationen mit letzteren auszutauschen,
- eine Verarbeitungs- und Steuereinheit (3a), die fähig ist, Authentifizierungsinformationen zu empfangen und zu verarbeiten, die vom kommunizierenden tragbaren Gerät (2) kommen, wenn dieses mit dem Zugangskontrolle-Lesegerät (3) verbunden ist, und auf der Basis dieser Authentifizierungsinformationen dem kommunizierenden tragbaren Gerät (2) ein Zugangsrecht zu erteilen oder nicht, und nach der Erteilung des Zugangsrechts und dem Empfang einer Steuerinformation der Aktivierung der Verriegelungsvorrichtung die Aktivierung der Verriegelungsvorrichtung zu steuern, um den Verriegelungszustand des entsprechenden Zugangselements (1) zu ändern,
wobei die Zugangskontrollvorrichtung **dadurch gekennzeichnet ist, dass** das oder jedes Zugangskontrolle-Lesegerät (3) außerdem enthält:
- eine Anwesenheitserkennungsvorrichtung (6), die zum Beispiel einen Radar und/oder eine Kamera enthält, die fähig ist, ein Entfernen und ggf. auch ein Annähern des Benutzers (4) bezüglich des Zugangskontrolle-Lesegeräts (3) zu erkennen und ein für die Erkennung repräsentatives Signal zu übertragen, und dass die Verarbeitungs- und Steuereinheit (3a) außerdem fähig ist, einerseits das für die Erkennung repräsentative Signal zu empfangen und das Signal zu analysieren, um zu bestimmen, ob der Benutzer (4) sich dem Zugangskontrolle-Lesegerät (3) nähert oder sich davon entfernt, und, wenn die Verarbeitungs- und Steuereinheit (3a) bestimmt, dass der Benutzer (4) sich entfernt, ein Trennsignal zu senden, das zur Wirkung hat, im Wesentlichen augenblicklich nach der Erkennung des Entfernens das Zugangskontrolle-Lesegerät (3) vom entsprechenden kommunizierenden tragbaren Gerät (2) zu trennen, und andererseits den Trennzustand, solange die Erfassungseinrichtungen ein Entfernen des Benutzers (4) bestimmen oder während einer vorbestimmten Periode, beizubehalten.

14. Zugangskontrollvorrichtung nach Anspruch 13, **dadurch gekennzeichnet, dass** die Anwesenheitserkennungsvorrichtung zum Beispiel mit Hilfe des Radars fähig ist, eine Erkennungswelle zu senden und eine Reflexion dieser letzteren auf dem Benutzer (4) des kommunizierenden tragbaren Geräts (2) zu erkennen, das mit der Zugangskontrolle-Lesegerät (3) verbunden ist.

15. Zugangskontrollvorrichtung nach Anspruch 14, **dadurch gekennzeichnet, dass** die Verarbeitungs- und Steuereinheit (3a) eine Frequenzabweichung zwischen der gesendeten Erkennungswelle und der vom Benutzer (4) reflektierten Erkennungswelle messen kann, die die Durchführung des Verfahrens nach Anspruch 3 erlaubt.

16. Zugangskontrollvorrichtung nach einem der Ansprüche 13 bis 15, **dadurch gekennzeichnet, dass** sie zum Beispiel mit Hilfe der Kamera fähig ist, das Gesicht eines Benutzers (4) zu erkennen, und dass die Verarbeitungs- und Steuereinheit (3a) fähig ist, im Verbindungsschritt das kommunizierende tragbare Gerät (2) nur mit dem Zugangskontrolle-Lesegerät (3) zu verbinden, wenn das Gesicht erkannt wurde.

17. Zugangskontrollvorrichtung nach einem der Ansprüche 13 bis 16, **dadurch gekennzeichnet, dass** sie außerdem Eingabeeinrichtungen der Steuerinformation der Aktivierung der Entriegelungsvorrichtung enthält und fähig ist, die Information für ihre Verarbeitung durch die Verarbeitungs- und Steuereinheit (3a) zum Zugangskontrolle-Lesegerät (3) zu senden, wobei die Eingabeeinrichtungen vorzugsweise in das kommunizierende tragbare Gerät (2) integriert oder darin enthalten sind.

18. Zugangskontrollvorrichtung nach einem der Ansprüche 13 bis 17, **dadurch gekennzeichnet, dass** sie außerdem vorzugsweise in das kommunizierende tragbare Gerät (2) integrierte oder darin enthaltene Eingabeeinrichtungen einer Identifizierungsinformation enthält, die die in den Ansprüchen 8 bis 12 definierte Identifizierungsaktion erlauben, wobei die Verarbeitungs- und Steuereinheit (3a) außerdem fähig ist, das die Identifizierungsinformation übertragende Identifizierungssignal zu analysieren, um den Benutzer (4) zu identifizieren.

19. Zugangskontrollvorrichtung nach einem der Ansprüche 13 bis 18, **dadurch gekennzeichnet, dass** sie außerdem eine vorzugsweise in das Zugangskontrolle-Lesegerät (3) integrierte Auswahleinrichtung von Betriebsarten enthält, die es ermöglicht, entweder eine erste Betriebsart der Zugangskontrollvorrichtung, einfache Authentifizierungsart genannt, in der das durchgeführte Zugangskontrollverfahren nicht den in einem der Ansprüche 8 bis 10 definierten Identifizierungsschritt enthält, oder eine zweite Betriebsart der Zugangskontrollvorrichtung, doppelte Authentifizierungsart genannt, auszuwählen, in der das durchgeführte Zugangskontrollverfahren den Identifizierungsschritt wie in einem der Ansprüche 8 bis 10 definiert enthält.

20. Zugangskontrollvorrichtung nach einem der Ansprüche 13 bis 19, **dadurch gekennzeichnet, dass** die Verarbeitungs- und Steuereinheit (3a) außerdem einen Speicher enthält und fähig ist, in dem Speicher Authentifizierungs- und Identifizierungspaare zu speichern, wodurch die Durchführung des Verfahrens nach Anspruch 8 erlaubt wird.

21. Zugangskontrollvorrichtung nach einem der Ansprüche 13 bis 20, **dadurch gekennzeichnet, dass** das kommunizierende tragbare Gerät (2) aus einem tragbaren Telefon oder einem Mobiltelefon besteht.

22. Zugangskontrollvorrichtung, nach einem der Ansprüche 13 bis 21, **dadurch gekennzeichnet, dass** das oder jedes Zugangskontrolle-Lesegerät (3) und das oder jedes kommunizierende tragbare Gerät (2) fähig sind, gemäß einer Norm oder einem Kommunikationsprotokoll, vorzugsweise Bluetooth oder RFID, miteinander zu kommunizieren, das einen bidirektionalen Datenaustausch über eine sehr kurze Entfernung wie in Anspruch 12 definiert erlaubt.

## Claims

1. Method for controlling access in at least one secure space closed by at least one access element (1) provided with a locking device, said method consisting in performing, using an access control device comprising at least one communicating portable unit (2) intended to be carried by a user (4) and at least one access control reader (3) dedicated to said access element and intended to be connected to the corresponding locking device, the following access control steps:
- a search step in which the access control reader (3) emits a search wave in a given zone, called scanning zone (5),
- a connection step in which a communicating portable unit (2) situated within the scanning zone (5) picks up the search wave and connects to the access control reader (3) by wireless link,
- an authentication step in which the communicating portable unit (2) thus connected communicates authentication information to said access control reader (3) which delivers, or does not deliver, on the basis of this information, a right of access to said communicating portable unit (2),
- if a right of access has been delivered by the access control reader (3), an instruction step in which the access control reader (3) modifies the locking state of the access element (1) to which it is connected following the reception by said access control reader (3) of information commanding activation of the locking device to modify the locking state of the access element (1), said command information being generated automatically following at least one action of the user,
the method being **characterized in that** it also consists, following the connection step, from the access control device in which the access control reader (3) comprises a presence detection device (6), preferably comprising a radar and/or a camera, said presence detection device being capable of detecting a distancing and, as appropriate, also an approach of the user (4) with respect to said access control reader (3) :
as soon as the presence detection device detects a distancing of the user (4), as long as the distancing is detected or for a predetermined period, in automatically and substantially instantaneously disconnecting the access control reader (3) from the communicating portable unit (2).

2. Access control method according to Claim 1, **characterized in that** it consists, from the presence detection device suited to this purpose, for example from the radar of the presence detection device, in emitting a detection wave in the scanning zone (5) and in receiving said detection wave after it has been reflected by the user (4).

3. Access control method according to Claim 2, **characterized in that** the detection of an approach or distancing of the user (4) is performed by measuring a frequency variation between the detection wave emitted and the detection wave reflected by the user (4).

4. Access control method according to either one of Claims 2 and 3, **characterized in that** the detection wave takes the form of a cone whose vertex coincides with the access control reader (3) and that has an angle at the vertex less than or equal to 30° and a height of dimension less than or equal to 70 cm.

5. Access control method according to any one of Claims 1 to 4, **characterized in that** it consists, from the presence detection device suited to this purpose, for example from the camera of the presence detection device:
- in acquiring images of the user (4) in order to be able to detect a possible distancing thereof and, as appropriate, an approach of the user (4), with respect to said access control reader (3),
and/or
- before the connection step, in detecting the face of a user (4) then, in the connection step, in connecting the communicating portable unit (2) to the access control reader (3) only if said face has been detected.

6. Access control method according to either one of Claims 1 and 2, **characterized in that** the action of the user (4) generating the command information consists in an approach of the user (4).

7. Access control method according to any one of Claims 1 to 6, **characterized in that** the command action of the user (4) consists of an action of the user (4) performed on the communicating portable unit suited to this purpose.

8. Access control method according to any one of Claims 1 to 7, **characterized in that** it further comprises an identification step in which the user (4) performs an identification action, preferably performed from the communicating unit, communicating identification information to the communicating portable unit (2), said identification action automatically generating an identification signal communicated to the access control reader (3) which recognizes, or does not recognize, on the basis of the information conveyed by this identification signal, the user (4) as being an identified user (4) and **in that** the right of access is delivered by the access control reader (3) only if the user (4) is identified and authorized.

9. Access control method according to Claim 8, **characterized in that** the identification action consists, from the communicating portable unit (2) suited to this purpose, in identifying the fingerprints of the user or in entering a personal identification code, such as a PIN code or in taking fingerprints or in facial recognition or a combination of these actions.

10. Access control method according to Claim 8 or 9, **characterized in that** the access control reader (3) assembles the information transmitted by the identification signal and the authentication information of the communicating portable unit (2) into a pair, called authentication and identification pair, in order to compare this pair to reference authentication and identification pairs contained in a databank, and **in that** the access control reader (3) recognizes a right of access only when a match between the authentication and identification pair transmitted by the communicating portable unit (2) and one of the reference authentication and identification pairs is found.

11. Access control method according to any one of Claims 8 to 10, **characterized in that**, from the access control device in which the communicating portable unit (2) consists of a mobile telephone, the identification step is performed via a mobile application installed on said at least one mobile telephone (2).

12. Access control method according to any one of Claims 1 to 11, **characterized in that** the search step is performed by emitting a search radio signal according to a communication standard, preferably Bluetooth, RFID or NFC, allowing a bidirectional exchange of data, preferably at very short distance, between the communicating portable unit (2) and the access control reader (3).

13. Device for controlling access in at least one secure space closed by at least one access element (1) provided with a locking device, said device being suitable for implementing the method according to any one of Claims 1 to 12 and comprising at least one communicating portable unit (2) intended to be carried by a user (4) and at least one access control reader (3) intended to be connected functionally to the or one of the locking devices, the or each access control reader (3) comprising:
- means for emitting a search wave over a given zone, called scanning zone (5),
- connection means allowing the access control reader (3) to be connected with the or one of the communicating portable units (2) situated in said scanning zone (5) to exchange information therewith,
- a processing and control unit (3a) capable of receiving and processing authentication information originating from the communicating portable unit (2) when the latter is connected to the access control reader (3) and of delivering, or not delivering, on the basis of this authentication information, a right of access to said communicating portable unit (2) and, following said delivery of the right of access and the reception of information commanding the activation of the locking device, in commanding the activation of the locking device to modify the state of locking of the corresponding access element (1),
the access control device being **characterized in that** the or each access control reader (3) further comprises:
- a presence detection device (6), for example comprising a radar and/or a camera, capable of detecting a distancing and, as appropriate, also an approach of the user (4) with respect to said access control reader (3) and of transmitting a signal representative of said detection, and **in that** said processing and control unit (3a) is also capable, on the one hand, of receiving the signal representative of the detection and of analysing said signal to determine whether the user (4) is approaching or moving away from the access control reader (3) and, if said processing and control unit (3a) determines that the user (4) is moving away, of sending a disconnection signal that has the effect of substantially instantaneously disconnecting, following said detection of distancing, the access control reader (3) from the corresponding communicating portable unit (2), and, on the other hand, of maintaining the state of disconnection as long as the acquisition means determine a distancing of the user (4) or for a predetermined period.

14. Access control device according to Claim 13, **characterized in that** the presence detection device is capable, for example by virtue of the radar, of emitting a detection wave and of detecting a reflection thereof on the user (4) of the communicating portable unit (2) connected to the access control reader (3).

15. Access control device according to Claim 14, **characterized in that** the processing and control unit (3a) is capable of measuring a frequency variation between the detection wave emitted and the detection wave reflected by the user (4) allowing the method according to Claim 3 to be implemented.

16. Access control device according to any one of Claims 13 to 15, **characterized in that** it is capable, for example by virtue of the camera, of detecting the face of a user (4) and **in that** the processing and control unit (3a) is capable, in the connection step, of connecting the communicating portable unit (2) to the access control reader (3) only if said face has been detected.

17. Access control device according to any one of Claims 13 to 16, **characterized in that** it further comprises means for inputting information commanding the activation of the unlocking device and capable of emitting said information to the access control reader (3) for it to be processed by the processing and control unit (3a), said input means preferably being incorporated or included in the communicating portable unit (2).

18. Access control device according to any one of Claims 13 to 17, **characterized in that** it further comprises means for inputting identification information, preferably incorporated or included in the communicating portable unit (2), allowing the identification action defined in Claims 8 to 10, the processing and control unit (3a) being also capable of analysing the identification signal conveying said identification information to identify the user (4).

19. Access control device according to any one of Claims 13 to 18, **characterized in that** it further comprises a means for selection of modes of operation, preferably incorporated in the access control reader (3), making it possible to select either a first mode of operation of the access control device, called single authentication mode, in which the access control method implemented does not comprise the identification step defined in any one of Claims 8 to 10, or a second mode of operation of the access control device, called dual authentication mode, in which the access control method implemented comprises the identification step as defined in any one of Claims 8 to 10.

20. Access control device according to any one of Claims 13 to 19, **characterized in that** the processing and control unit (3a) further comprises a memory and is capable of storing authentication and identification pairs in said memory, thus allowing the implementation of the method according to Claim 8.

21. Access control device according to any one of Claims 13 to 20, **characterized in that** the communicating portable unit (2) consists of a portable or cellular telephone.

22. Access control device according to any one of Claims 13 to 21, **characterized in that** the or each access control reader (3) and the or each communicating portable unit (2) are capable of communicating with one another according to a communication standard or protocol, preferably Bluetooth or RFID, allowing a bidirectional exchange of data at very short distance as defined in Claim 12.
